# EUROPEAN PATENT SPECIFICATION

(11) **EP 2 271 001 B1**
(45) Date of publication and mention of the grant of the patent: **20.04.2016**
(21) Application number: 09290502.5
(22) Date of filing: 29.06.2009
(51) Int. Cl.: H04B 7/04, H04B 7/02

(54) **Method and communication network for MIMO transmissions**
Verfahren und Kommunikationsnetzwerk für MIMO-Übertragungen
Procédé et réseau de communication pour transmissions MIMO

(43) Date of publication of application: 05.01.2011
(73) Proprietor: ALCATEL LUCENT, 92100 Boulogne-Billancourt (FR)
(72) Inventor: Hettstedt, Heinz-Dieter, 30916 Isernhagen (DE); Schomburg, Ekkehard, 30938 Burgwedel (DE)
(74) Representative: Wetzel, Emmanuelle

(56) References cited:
- US-A1- 2005 157 675
- US-A1- 2009 080 388

## Description

### Field of the Invention

The invention relates to the field of wireless communications, and, more precisely, to the distribution of data to and from a plurality of terminals which may be located indoors, e.g. in buildings or in tunnels.

### Background

This section introduces aspects that may be helpful in facilitating a better understanding of the invention. Accordingly, the statements of this section are to be read in this light and are not to be understood as admissions about what is in the prior art or what is not in the prior art.

For distributing RF transmission data in downlink to a plurality of terminals being located indoors, e.g. in buildings or in tunnels, a mobile communications system such as the so-called ClearFill Star (CFS) System may be employed, the latter being described in detail e.g. in US 2005/0157675 A1. A schematic diagram of the CFS communications network **1** is shown in **Fig. 1****.** The CFS network 1 has a data source in the form of a base station **2** which provides a standard RF interface (for I/Q baseband signals), the base station 2 being devised as, e.g., a Base Transceiver Station / (enhanced) an eNodeB, etc. Alternatively or in addition, the RF transmission data may be provided by other data sources such as an Off-Air Repeater (OAR) **2**'. The data source 2, 2' may receive the data to be transmitted in downlink via a (core) data network **3,** such as the Internet.

For distributing the downlink data to a plurality of terminals (not shown) being located indoors, the CFS network 1 further comprises a data network, such as an Ethernet network **4,** which may be deployed in a building for providing packet-based services. For distributing the downlink data over the Ethernet network 4, a base station interface **5** is provided, which digitises the RF transmission data delivered by the RF interface of the base station 2, formats the RF transmission data into data packets (by adding a packet header) in the downlink direction and performs the reverse process (i.e. removing the packet headers) in the uplink direction. The data interface of the base station interface 5 may be devised as an electrical interface (for CAT5 cabling) or as an optical interface. In any case, the data management may be performed using the Ethernet protocol.

The main elements of the Ethernet network 4 are Gigabit Ethernet Switches (GES) **6a, 6b,** ... which provide functions of network configuration and segmentation of data flow. In this way, a cell sectorisation can be achieved by configuration of Virtual Local Area Networks (VLANs) via a NMS (Network Management System) 7. Thus, each sector of the wireless network 1 (only one sector S1 being shown for the sake of simplicity) may be attributed to a different Virtual LAN. In each sector, one or more Remote Radio Heads, **RRHs,** are arranged, being adapted for converting the information contained in the data packets by removing the packet headers, forwarding the resulting (I/Q) baseband signals to a buffer, and subsequently processing the information contained in the baseband signals to broadcast the information over the air via RRH antenna(s) to the recipient end user terminal(s).

In the uplink, a summing function in one of the Remote Radio Heads of each sector may combine signals from different Remote Radio Heads of that sector in order to achieve data compression over the Ethernet network 4. In the base station interface 5, another summing function combines uplink signals from the different Gigabit Ethernet Switches 6a, 6b originating from the same sector, e.g. from the first sector S1.

The CFS network 1 is cost-effective, as it provides the opportunity to take advantage of already deployed digital communications systems, e.g. Ethernet systems, for RF communications, thus allowing for low installation costs and high flexibility in network configurations. The CFS system may in particular be implemented for different standards such as GSM, CDMA, UMTS, or LTE. However, the standard CFS system does not make use of Multiple-Input-Multiple-Output (MIMO) processing.

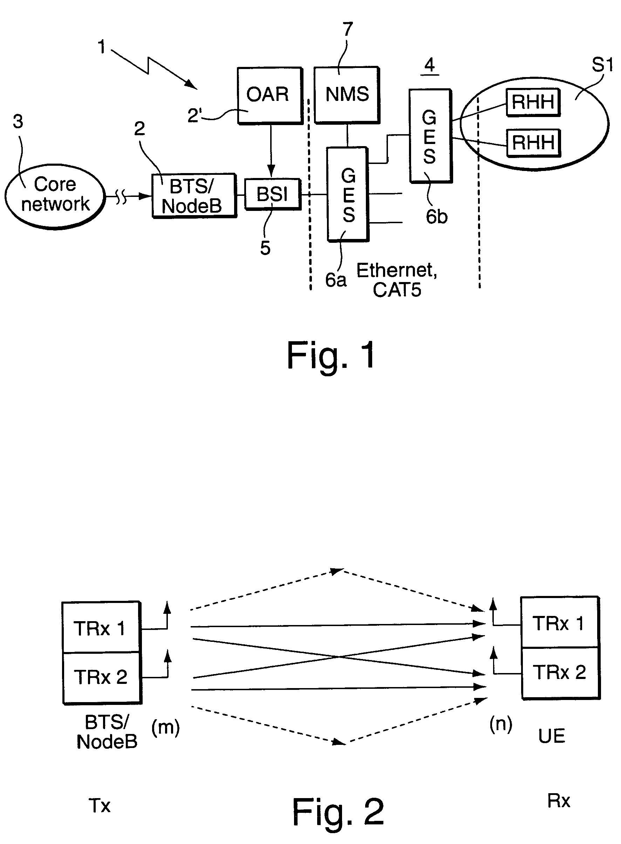

In MIMO systems such as the one shown in **Fig. 2****,** processing units in combination with antenna arrays on the transmitter (**Tx**) side and on the receiver (**Rx**) side provide the opportunity to improve the performance of a wireless communications channel in order to optimise data rates and throughput even above the theoretical Shannon limit. The number of antenna elements m, n on the Tx and Rx side, respectively, and thus the number of transmitted signals determine the type of system: SIMO (Single-Input-Multiple-Output), MISO (Multiple-Input-Single-Output) or space diversity.

In the example of Fig. 2, a two times two MIMO system having two transceiver antennas TRx1, TRx2, being implemented e.g. in a base station such as a Base Transceiver Station, BTS, or an enhanced NodeB, and two further transceiver antennas TRx1, TRx2 at the receiver side Rx, e.g. in a user equipment UE, is shown. In the MIMO system of Fig. 2, both at the transmitter side Tx and the receiver side Rx, two individual TRx paths are provided to distribute two signals in parallel. The distribution of the signals between the Tx side and the Rx side may be performed directly or over a multi-path transmission (due to reflections), represented by dashed arrows in Fig. 2.

The BTS/NodeB and the Mobile/UE of the MIMO system typically include data processing units which analyse and combine received signals at optimum performance in order to provide spatial diversity for providing fading countermeasures and interference cancellation. If more than one signal is transmitted via multiple transceiver paths, the processing units may take advantage of the multi-path transmission in order to establish different radio channels in parallel while using the same RF spectrum.

A multi-user MIMO system for providing downlink transmissions to terminals being located indoors is described in the article "An Experimental Downlink Mulituser MIMO System with Distributed and Coherently-Coordinated Transmit Antennas", by D. Samardzija et al., IEEE International Conference on Communications, 2007, ICC '07, pp. 5365-5370. In this paper, indoor measurement results are presented which demonstrate that significant gains may be attained even in the presence of practical impairments.

US 2009/0080388 A1 discloses a wireless local area network and an access point for such a network. The access point comprises two parallel transmission/processing paths, each with a MAC entity, a PHY entity, and an RF engine. A basic service set (BSS) controller is provided for controlling the different processing paths. A MIMO transmission scheme may be established to a terminal of a single basic service set.

### Summary of the Invention

One aspect of the invention is implemented in a method for performing communications in a wireless communication network, comprising: generating RF transmission data in a first and second transceiver unit arranged in parallel transceiver paths, the generation of the RF transmission data being coordinated in accordance with a MIMO transmission scheme using a common backhaul processing unit, providing first and second downlink data packets containing the RF transmission data to an Ethernet network over the parallel transceiver paths, the first downlink data packets containing RF transmission data for performing RF transmissions in a first transceiver and the second downlink data packets containing RF transmission data for performing RF transmissions in a second transceiver, distributing the first and second data packets over the Ethernet network to a first and second sector of the wireless communication network, the first sector comprising the first transceiver, the second sector comprising the second transceiver, the first and second transceivers being adapted for performing RF transmissions, and transmitting the RF transmission data contained in the first and second data packets in parallel from the first and second one of the transceivers to at least one terminal using the MIMO transmission scheme.

The inventors propose to modify the CFS system of the state of the art to allow performing MIMO transmissions. For this purpose, two transceiver paths for transporting RF transmission data are provided, each one allowing for individually distributing corresponding data packets over the data network. Typically, the first data packets contain RF data for performing transmissions in the first radio transceiver, and the second data packets contain RF transmission data for performing parallel (coordinated) transmissions in the second radio transceiver. Thus, a MIMO transmission scheme with multiple channels can be implemented between the RF transceivers and at least one mobile terminal, the latter typically comprising at least two antennas for coordinated reception. It will be understood that a third, fourth transceiver path for data packets originating from further transceiver units may be provided, in case that a MIMO transmission with coordinated transmissions including more than two transceivers has to be implemented. Typically, the RF transmission data is RF baseband data (e.g. I/Q baseband data) which contains the symbols to be transmitted to the terminal(s) over an air interface. The Ethernet network, typically having a tree-like structure, is preferably already installed inside the building in which the MIMO transmission has to be performed.

In one variant not in accordance with the invention, the first and second transceivers are arranged in the same sector of the wireless communication system. In this case, the active antenna elements / antenna arrays of the transceivers are typically arranged at a distance of about one half of the (center) wavelength of the RF transmissions, thus allowing to perform "classical" MIMO transmissions in the way described above. It will be understood that more than two transceivers may be combined in the same transceiver arrangement, the transceivers of the arrangement being spaced apart from each other by about half of the transmission wavelength. Also, a plurality of such transceiver arrangements may be located in the same sector, the transceiver arrangements having a mutual distance being considerably larger than half the transmission wavelength. In particular, the transceiver arrangements of one sector may be arranged in different rooms or on different floors of a building.

The user equipments arranged in a respective sector typically comprise a number of transceiver antennas corresponding to the number of transceivers (two in the present case) being arranged in one transceiver arrangement and located at a distance of about half the transmission wavelength, thus allowing to perform a MIMO scheme as shown in Fig. 2, both in the uplink and downlink.

In the case described above which is not in accordance with the invention, the RF transmission data for the first and second data packets is typically generated in two transceiver units being arranged at a common location within the communication network, preferably in a base station. The RF transmission data is then converted to data packets in two (or more) BSIs of two (or more) different transceiver paths and is subsequently distributed over the data network. Each sector comprises at least one transceiver arrangement having the same number of transceivers as there are transceiver paths (and also transceiver units). Each remote radio head of a sector may include two (or more) transceivers in a single box; alternatively, two (or more) individual RRHs, each with a single transceiver may be provided, being located adjacent to each other at spacing of about one half of the transmission wavelength of the RF transmissions. In any case, coordination between BSI and RRH per sector can be performed via VLANs in an easy and flexible way using an appropriate network management system. Diversity and network processing may then be performed in the base station for each RRH of each sector individually.

According to the invention, the first and second transceivers are located in different sectors of the wireless communication system. In this case, spatially distributed transceivers, resp., (active) antenna elements are used, being distributed over an area at a spacing of many wavelengths and belonging to different sectors.

In this case, the RF transmission data for the first and second data packets to be distributed to the different sectors are generated in a first and second transceiver unit arranged in parallel transceiver paths. Preferably, the first and second transceiver unit are arranged at different locations within the communication network, in particular in different base stations. The huge benefit of such a system is that the BSIs and RRHs of conventional CFS systems may be re-used, thus keeping the active devices simple for production. In this way, a network which provides high data rates at hot spots for HSPA+ and Long-term Evolution (LTE) may be implemented in a cost-effective manner. Alternatively, the sectors may belong to the same base station, the transceiver units being typically arranged at the same location (in the base station) in this case. One skilled in the art will readily appreciate that different sectors may have an overlap area, it being even possible that two or more sectors cover an identical geographical area, e.g. the same room of a building.

Also in this case, the generation of the RF transmission data in the transceiver units is performed using a common backhaul processing unit, being connected to the base stations and organizing the RRHs in a network MIMO. Thus, the network processing in the backhaul may provide diversity and beam forming over the two (or more) BTS/Node Bs. The network processing can be used to cancel interference between the sectors in the coverage areas which are covered by RRHs of different sectors, leading to interference cancellation and thus to an improvement of RF channel performance and throughput, also providing MIMO functionality in overlapping areas of the sectors.

In a preferred variant, different sectors of the wireless communication system are attributed to different Virtual LANs of the data network. In such a way, an efficient coordination between BSI(s) and RRH(s) per sector may be implemented. The attribution of the sectors to the VLANs may be implemented using an appropriate network management system for the data network.

In another variant, the method further comprises: aggregating data packets of RF transmission data received in the first transceiver to form a first uplink stream of data packets, and aggregating data packets of RF transmission data received in the second transceiver to form a second uplink stream of data packets. The summing in the uplink has to be performed for each of the transceiver paths individually, and may be performed either in the RRHs, in a switch located in the data network, in particular in a Gigabit Ethernet switch (GES), or in the Base Station Interfaces. Further Gigabit Ethernet Switches having summing functionalities may be provided in the data network in order to combine the transceiver data packages from other Gigabit Ethernet switches and to direct the different transceiver packages to the appropriate BSI. In this way, the BTS/Node B can perform data processing in the uplink for each transceiver path individually, i.e. the first and second uplink stream of data packets is provided to the first and second BSI, respectively. Thus, the CFS system will be transparent for the BTS/Node B(s). However, it is also possible to perform the aggregation only in the Base Station Interfaces.

Typically, the transceivers of the wireless communication system are arranged in a building. The MIMO transmission scheme as described herein may be advantageously used for performing RF transmissions to terminals arranged in buildings, not only when a network MIMO transmission scheme is used, but also when a classical MIMO transmission scheme with more than one transceiver per sector is performed.

The method described above may be implemented in a computer program product being devised as a suitable software or hardware, in particular as a field programmable gate array (FPGA), an application-specific integrated circuit (ASIC), or a Digital Signal Processor (DSP). It will be understood that the computer program product may be a distributed software or hardware, comprising several parts being located at different positions within the network. Another aspect of the invention relates to a communication network, comprising: a first and second transceiver unit for generating RF transmission data, a common backhaul processing unit adapted to coordinate the generation of the RF transmission data in the transceiver units in accordance with a MIMO transmission scheme, the first and second transceiver units being arranged in parallel transceiver paths, a first data packet providing unit in the first transceiver path for providing first downlink data packets containing RF transmission data for performing RF transmissions in a first transceiver, a second data packet providing unit for providing second downlink data packets containing RF transmission data for performing RF transmissions in a second transceiver, an Ethernet network for distributing the first and second downlink data packets to a first and second sector, the first sector comprising the first transceiver, the second sector comprising the second transceiver, the first and second transceivers being adapted for performing RF transmissions, the communication network being adapted for parallel transmission of the RF downlink data comprised in the first and second data packets from the first and second one of the transceivers to at least one (possibly mobile) end user terminal using the MIMO transmission scheme. The first and second data packet providing units are typically implemented as base station interfaces for packing RF transmission data, typically provided in the form of baseband data, e.g. as I/Q samples, into data packets which may then be distributed over the data network.

In one implementation not in accordance with the invention, the first and second transceiver are arranged in the same sector of the communication network, thus allowing for providing a classical MIMO transmission scheme.

In a further implementation not in accordance with the invention, the communication network comprises a base station having a first and a second transceiver unit for generating the RF transmission data for the first and second data packets, the base station preferably being adapted to coordinate the generation of the RF transmission data in the transceiver units in accordance with the MIMO transmission scheme. In this way, a coordinated transmission may be performed using a classical MIMO transmission scheme.

In accordance with the invention, the first and second transceivers are arranged in different sectors. The antennas / antenna arrays of the transceivers are typically spatially separated by much more than half the wavelength of the transmission signals in the case, such that a network MIMO transmission scheme has to be applied.

In this case, the communication network further comprises a first and a second transceiver unit for generating the RF transmission data for the first and second data packets to be distributed to the different sectors, the first and second transceiver units being optionally arranged in a first and second base station.

According to the invention, the communication network further comprises a backhaul processing unit adapted to coordinate the generation of the RF transmission data in the transceiver units in accordance with the MIMO transmission scheme. In such a way, diversity and beam forming may be provided over the different base stations, allowing to perform interference cancellation, leading to an improvement of RF channel performance and throughput, also providing MIMO functionality in overlapping areas of the sectors.

In an embodiment, the data network comprises at least one aggregation unit, in particular a Gigabit Ethernet switch, being adapted to aggregate data packets containing RF transmission data received in the first transceiver to form a first uplink stream of data packets, and aggregating data packets containing RF transmission data received in the second transceiver to form a second uplink stream of data packets. In such a way, RF transmission data from the user equipments / terminals may be transmitted through the data network in the uplink, such that the RF transmission data can be directed to the correct base station interface for performing processing of the uplink data individually for each transceiver path.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram of a communication system having a single transceiver path, being adapted for providing RF transmission data to a plurality of indoor terminals,
- **Fig. 2**: shows a schematic diagram of a classical MIMO system,
- **Fig. 3**: shows a schematic diagram of an implementation of a communication network not in accordance with the invention, having two parallel transceiver paths terminating in the same sector, and
- **Fig. 4**: shows a schematic diagram of an embodiment of a communication network according to the invention, having two parallel transceiver paths terminating in different sectors.

### Detailed Description of Preferred Embodiments

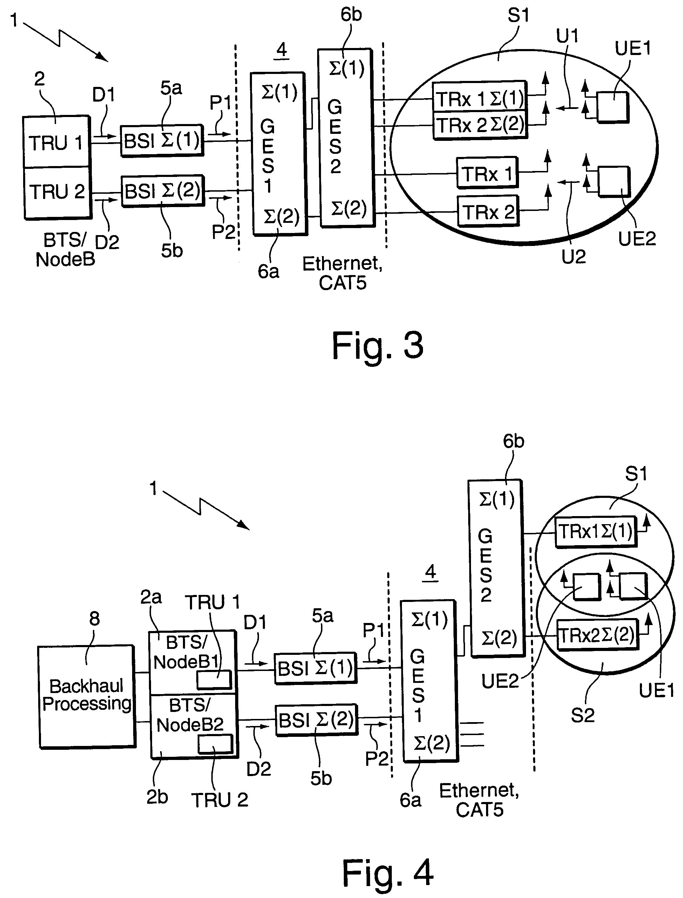

**Fig. 3** shows a modified version of the communication network 1 of Fig. 1 not in accordance with the invention, being adapted for performing communications using a MIMO transmission scheme. For this purpose, instead of one transceiver path as shown in Fig. 1, two parallel transceiver paths are installed in the communication network 1, the two transceiver paths originating from two transceiver units **TRU1, TRU2,** being arranged in a common base station 2, which may be devised as e.g. an eNodeB or as a Base Transceiver Station, BTS, both transceiver paths terminating in a first sector S1.

Each of the transceiver units TRU1, TRU2 is adapted to generate RF transmission data **D1, D2** in the form of an I/Q baseband signal. The RF transmission data D1, D2 is then transformed into data packets P1, P2 in a respective base station interface **5a, 5b** by adding packet headers. The data packets P1, P2 containing the uplink data D1, D2 are then distributed over the Ethernet network 4 to the first sector S1, comprising a Remote Radio Head (not shown) having two parallel transceivers **TRx1, TRx2** forming a transceiver arrangement in a single box, being shown in the upper part of the sector S1.

In addition, two individual remote radio heads RRHs, each having a single, further transceiver TRx1, TRx2 are provided in the first sector S1, see the lower part of Fig. 3. The transceiver antennas of the further transceivers TRx1, TRx2 are located adjacent to each other at a spacing of about half the transmission wavelength, the further transceivers TRx1, TRx2 forming a further transceiver arrangement. Each transceiver arrangement with a pair of parallel transceivers TRx1, TRx2 is adapted to perform coordinated RF transmissions in a MIMO transmission scheme as shown in Fig. 2. It will be understood that the number of transceivers in a transceiver arrangement corresponds to the number of transceiver paths being provided in the communication network, the number of transceiver paths corresponding to the number of transceiver units being provided in the BTS/eNodeB 2. In each case, an individual transceiver arrangement may be implemented in one RRH forming a single box with a plurality of transceiver antennas, or two or more RRHs having transceiver antennas which are spaced apart by half the transmission wavelength may form a transceiver arrangement.

The data packets P1, P2 originating from a respective one of the transceiver units TRU1, TRU2 are received in a respective transceiver TRx1, TRx2 of each pair of transceivers TRx1, TRx2 being arranged in the first sector S1. The packet headers are removed from the data packets P1, P2 for reproducing the RF transmission data D1, D2 in the form of I/Q baseband data which is buffered before being transmitted via parallel channels from each pair of transceivers TRx1, TRx2 over the air to a respective user equipment **UE1, UE2** using a classical MIMO transmission scheme. In the example of Fig. 3, each user equipment UE1, UE2 comprises two antennas for performing the MIMO transmission scheme.

For performing uplink transmissions within the communication network 1 of Fig. 3, RF transmission data **U1** generated by the user equipment UE1, resp., transmission data **U2** generated by the user equipment UE2 has to be summed up for each of the existing transceiver paths (from transceivers TRx1 / TRx2 to transceiver units TRU 1, TRU 2) individually in order to generate separate uplink streams **Σ(1)**, **Σ(2)** provided to a respective one of the base station interfaces 5a, 5b. For this purpose, typically the first Gigabit Ethernet Switch 6a has summing functionalities in order to combine the different transceiver data packages provided by different Gigabit Ethernet Switches 6b (GES2) being arranged in the data network 4 at locations closer to the sector S1. Thus, the RF transmission data contained in the transceiver packages from the different transceivers TRx1, TRx2 are provided to the appropriate base station interface 5a, 5b. The data contained in the uplink streams Σ(1), Σ(2) is then provided to a respective transceiver unit TRU1, TRU2 for further processing in a processing equipment (not shown) of the base station 2, the latter performing diversity and network processing for each RRH / transceiver path individually. It will be understood that alternatively or in addition, the data contained in the uplink streams may also be aggregated in the RRHs and/or the Base Station Interface.

A further example of a communication network 1 being adapted for MIMO transmissions is shown in **Fig. 4****,** the network of Fig. 4 differing from the network shown in Fig. 3 in that the two parallel transceiver paths start at two transceiver units TRU1, TRU 2 being located at different base stations **2a, 2b** and terminate in transceivers TRx1, TRx2 arranged in different sectors S1, **S2.** Thus, the transceivers TRx1, TRx2 of the first and second transceiver path are spatially distributed, the first transceiver TRx1 being arranged in a RRH of the first sector S1, the second transceiver TRx2 being arranged in a RRH of the second sector S2. It will be understood that the transceiver units TRU1, TRU2 may also be arranged at a common location, e.g. in the same base station 2. In the latter case, the sectors S1, S2 belong to the same base station 2.

In any case, the transceiver antennas of the first and second transceiver TRx1, TRx2 are spatially separated by a distance covering many wavelengths, such that the "classical" MIMO approach is not applicable in this case. In order to apply a MIMO transmission scheme anyhow, a backhaul processing unit **8** is provided in the network 1, the processing unit 8 being adapted to coordinate the generation of the RF (downlink) transmission data D1, D2 in the transceiver units TRU1, TRU2 in accordance with the MIMO transmission scheme, thus allowing to provide diversity and beam forming over the base stations 2a, 2b. In this way, interference between the coverage areas which are covered by RRHs of different sectors S1, S2 may be cancelled, the interference cancellation leading to an improvement of RF channel performance and throughput of the communication network 1. Also, MIMO functionality may be provided to user equipments UE1, UE2 in overlapping areas of the sectors S1, S2.

In the example of Fig. 4, the interference cancellation may be performed for the second user equipment UE2 which is arranged in an overlapping area of the two sectors S1, S2. The user equipment UE2 has a single transceiver antenna and is served by the first transceiver unit TRx1 being arranged in the first sector S1, the signal contribution from the second sector S2 being cancelled using the interference cancellation due to the network MIMO. For the first user equipment UE1, having two antennas and being also arranged in the overlapping area of the first and second sector S1, S2, a MIMO scheme may be performed using the transceivers TRx1, TRx2 arranged in the different sectors S1, S2 using the backhaul processing unit 8.

The coordination between the base station interfaces 2a, 2b and the remote radio heads in the sectors S1, S2 can be performed in an easy and flexible way by deploying VLANs in the Ethernet network 4, each sector S1, S2 being attributed to a different one of the VLANs. The attribution may be performed using a Network Management System (not shown) integrated into the Ethernet network 4. It will be understood that the communication network 1 shown in Fig. 3 may also comprise more than one sector, in case that the Ethernet network 4 provides sufficient capacity for the transportation of the data packets.

Those skilled in the art will appreciate that in the communication network 1 of Fig. 4, transmission of uplink data may be performed in a similar way as in the communication network 1 of Fig. 3, such that no detailed description of the uplink transmissions will be given, a MIMO functionality being provided also in the uplink. One benefit of the communication network 1 shown in Fig. 4 is that the base station interfaces 2a, 2b and the remote radio heads / transceivers of the CFS system as shown in Fig. 1 may be re-used, keeping the active devices simple for production.

In any case, by using the methods and devices as described above, high data rates and improved channel performance due to interference cancellation may be provided for HSPA+ and LTE in hot spots (buildings etc.) in a cost-efficient way. It will be understood that combining the approaches described with respect to Fig. 3 and Fig. 4 in different sectors of the same communication network is also possible. Moreover, instead of an Ethernet network, other packet-based networks may be used as data networks, such (cable-based) networks being preferably already deployed in the area where the user equipments / terminals to be served by the wireless communications described herein are arranged.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Method for performing communications in a wireless communication network (1), comprising:
generating RF transmission data (D1, D2) in a first and second transceiver unit (TRU1, TRU2) arranged in parallel transceiver paths, the generation of the RF transmission data (D1, D2) being coordinated in accordance with a MIMO transmission scheme using a common backhaul processing unit (7),
providing first and second downlink data packets (P1, P2) containing the RF transmission data (D1, D2) to an Ethernet network (4) over the parallel transceiver paths, the first downlink data packets (P1) containing RF transmission data (D1) for performing RF transmissions in a first transceiver (TRx1) and the second downlink data packets (P2) containing RF transmission data (D2) for performing RF transmissions in a second transceiver (TRx2),
distributing the first and second data packets (P1, P2) over the Ethernet network (4) to a first and second sector (S1, S2) of the wireless communication network (1), the first sector (S1) comprising the first transceiver (TRx1), the second sector (S2) comprising the second transceiver (TRx2), the first and second transceivers (TRx1, TRx2) being adapted for performing RF transmissions, and
transmitting the RF transmission data (D1, D2) contained in the first and second data packets (P1, P2) in parallel from the first and second one of the transceivers (TRx1, TRx2) to at least one terminal (UE1, UE2) using the MIMO transmission scheme.

2. Method according to claim 1, wherein the first and second transceiver units (TRU1, TRU2) are arranged at different locations within the communication network (1).

3. Method according to claim 2, wherein the first and second transceiver units (TRU1, TRU2) are arranged in different base stations (2a, 2b).

4. Method according to claim 1, wherein the first and second sectors (S1, S2) of the wireless communication system (1) are attributed to different Virtual LANs of the Ethernet network (4).

5. Method according to claim 1, further comprising:
aggregating data packets containing RF transmission data (U1) received in the first transceiver (TRx1) to form a first uplink stream (Σ(1)) of data packets, and aggregating data packets containing RF transmission data (U2) received in the second transceiver (TRx2) to form a second uplink stream (Σ(2)) of data packets.

6. Method according to claim 1, wherein the transceivers (TRx1, TRx2) of the wireless communication system (1) are arranged in a building.

7. Communication network (1), comprising:
a first and second transceiver unit (TRU1, TRU2) for generating RF transmission data (D1, D2),
a common backhaul processing unit (7) adapted to coordinate the generation of the RF transmission data (D1, D2) in the transceiver units (TRU1, TRU2) in accordance with a MIMO transmission scheme, the first and second transceiver units (TRU1, TRU2) being arranged in parallel transceiver paths,
a first data packet providing unit (5a) in the first transceiver path for providing first downlink data packets (P1) containing RF transmission data (D1) for performing RF transmissions in a first transceiver (TRx1), a second data packet providing unit (5b) in the second transceiver path for providing second downlink data packets (P2) containing RF transmission data (D2) for performing RF transmissions in a second transceiver (TRx2),
an Ethernet network (4), for distributing the first and second downlink data packets (P1, P2) to a first and second sector (S1, S2), the first sector (S1) comprising the first transceiver (TRx1), the second sector (S2) comprising the second transceiver (TRx2), the first and second transceivers (TRx1, TRx2) being adapted for performing RF transmissions,
the communication network (1) being adapted for parallel transmission of the RF downlink data (D1, D2) comprised in the first and second data packets (P1, P2) from the first and second one of the transceivers (TRx1, TRx2) to at least one terminal (UE1, UE2) using the MIMO transmission scheme.

8. Communication network according to claim 7, wherein the first and second transceiver units (TRU1, TRU2) are arranged in a first and second base station (2a, 2b).

9. Communication network according to claim 7, wherein the Ethernet network (4) comprises at least one aggregation unit (6a, 6b), in particular a Gigabit Ethernet switch, being adapted to aggregate data packets containing RF transmission data (U1; U2) received in the first transceiver (TRx1) to form a first uplink stream (Σ(1)) of data packets, and for aggregating data packets containing RF transmission data (U1; U2) received in the second transceiver (TRx2) to form a second uplink stream (Σ(2)) of data packets.

## Patentansprüche

1. Verfahren zur Durchführung von Kommunikationen in einem drahtlosen Kommunikationsnetzwerk (1), umfassend:
Generieren von RF-Übertragungsdaten (D1, D2) in einer ersten und einer zweiten Transceiver-Einheit (TRU1, TRU2), angeordnet auf parallelen Transceiver-Pfaden,
wobei das Generieren der RF-Übertragungsdaten (D1, D2) gemäß einem MIMO-Übertragungsschema unter Verwendung einer gemeinsamen Backhaul-Verarbeitungseinheit (7) koordiniert wird,
Bereitstellen erster und zweiter Downlink-Datenpakete (P1, P2), welche die RF-Übertragungsdaten (D1, D2) enthalten, über die parallelen Transceiver-Pfade für ein Ethernet-Netzwerk (4), wobei die ersten Downlink-Datenpakete (P1) RF-Übertragungsdaten (D1) für die Durchführung von RF-Übertragungen in einem ersten Transceiver (TRx1) und die zweiten Downlink-Datenpakete (P2) RF-Übertragungsdaten (D2) für das Durchführen von RF-Übertragungen in einem zweiten Transceiver (TRx2) enthalten,
Verteilen des ersten und zweiten Datenpakets (P1, P2) über das Ethernet-Netzwerk (4) an einen ersten und zweiten Sektor (S1, S2) des drahtlosen Kommunikationsnetzwerks (1), wobei der erste Sektor (S1) den ersten Transceiver (TRx1) umfasst, der zweite Sektor (S2) den zweiten Transceiver (TRx2), wobei der erste und der zweite Transceiver (TRx1, TRx2) ausgelegt sind für das Durchführen von RF-Übertragungen, und
parallele Übertragen der im ersten und zweiten Datenpaket (P1, P2) enthaltenen RF-Übertragungsdaten (D1, D2) vom ersten und zweiten der Transceiver (TRx1, TRx2) an mindestens ein Terminal (UE1, UE2), dabei das MIMO-Übertragungsschema verwendend.

2. Verfahren nach Anspruch 1, wobei die erste und die zweite Transceivereinheit (TRU1, TRU2) an verschiedenen Orten innerhalb des Kommunikationsnetzwerks (1) angeordnet sind.

3. Verfahren nach Anspruch 2, wobei die erste und die zweite Transceivereinheit (TRU1, TRU2) in verschiedenen Basisstationen (2a, 2b) angeordnet sind.

4. Verfahren nach Anspruch 1, wobei der erste und der zweite Sektor (S1, S2) des drahtlosen Kommunikationssystems (1) verschiedenen virtuellen LANs de Ethernet-Netzwerks (4) zugeordnet sind.

5. Verfahren nach Anspruch 1, weiterhin umfassend:
das Bündeln von Datenpaketen, die im ersten Transceiver (TRx1) empfangene RF-Übertragungsdaten (U1) enthalten, zwecks Bildung eines ersten Uplink-Stroms (Σ(1)) von Datenpaketen, und das Bündeln von Datenpaketen, die im zweiten Transceiver (TRx2) empfangene RF-Übertragungsdaten (U2) enthalten, zwecks Bildung eines zweiten Uplink-Stroms (Σ(2) von Datenpaketen.

6. Verfahren nach Anspruch 1, wobei die Transceiver (TRx1, TRx2) des drahtlosen Kommunikationssystems (1) in einem Gebäude angeordnet sind.

7. Kommunikationsnetzwerk (1), umfassend:
eine erste und eine zweite Transceivereinheit (TRU1, TRU2) für das Generieren von RF-Übertragungsdaten (D1, D2),
eine gemeinsame Backhaul-Verarbeitungseinheit (7), die ausgelegt ist für das Koordinieren der Generierung der RF-Übertragungsdaten (D1, D2) in den Transceivereinheiten (TRU1, TRU2) gemäß einem MIMO-Übertragungsschema,
wobei die erste und die zweite Transceivereinheit (TRU1, TRU2) auf parallelen Transceiver-Pfaden angeordnet sind,
eine erste Paketbereitstellungseinheit (5a) auf dem ersten Transceiver-Pfad für das Bereitstellen erster, RF-Übertragungsdaten (D1) enthaltender Downlink-Datenpakete (P1) für das Durchführungen von RF-Übertragungen in einem ersten Transceiver (TRx1) und eine zweite Datenpaketbereitstellungseinheit (5b) auf dem zweiten Transceiver-Pfad für das Bereitstellen zweiter, RF-Übertragungsdaten (D2) enthaltender Downlink-Datenpakete (P2) für das Durchführungen von RF-Übertragungen in einem zweiten Transceiver (TRx2)
Ein Ethernet-Netzwerk (4) für das Verteilen des ersten und zweiten Downlink-Datenpakets (P1, P2) an einen ersten und zweiten Sektor (S1, S2), wobei der erste Sektor (S1) den ersten Transceiver (TRx1) umfasst, der zweite Sektor (S2) den zweiten Transceiver (TRx2), wobei der erste und der zweite Transceiver (TRx1, TRx2) ausgelegt sind für das Durchführen von RF-Übertragungen,
wobei das Kommunikationsnetzwerk (1) ausgelegt ist das parallele Übertragen der im ersten und zweiten Datenpaket (P1, P2) enthaltenen RF-Downlinkdaten (D1, D2) vom ersten und zweiten der Transceiver (TRx1, TRx2) an mindestens ein Terminal (UE1, UE2), dabei das MIMO-Übertragungsschema verwendend.

8. Kommunikationsnetzwerk nach Anspruch 7, wobei die erste und die zweite Transceivereinheit (TRU1, TRU2) in einer ersten und einer zweiten Basisstation (2a, 2b) angeordnet sind.

9. Kommunikationsnetzwerk nach Anspruch 7, wobei das Ethernet-Netzwerk (4) mindestens eine Bündelungseinheit (6a, 6b) umfasst, konkret einen Gigabit-Ethernet-Switch, ausgelegt für das Bündeln von RF-Übertragungsdaten (U1, U2) enthaltenden Datenpaketen, die im ersten Transceiver (TRx1) empfangen wurden, zwecks Bildung eines ersten Uplink-Stroms (Σ(1) von Datenpaketen und für das Bündeln von RF-Übertragungsdaten (D1, D2) enthaltenden Datenpaketen, die im zweiten Transceiver (TRx2) empfangen wurden, zwecks Bildung eines zweiten Uplink-Stroms (Σ(2) von Datenpaketen.

## Revendications

1. Procédé pour effectuer des communications dans un réseau de communication sans fil (1), comprenant les étapes suivantes :
générer des données de transmission RF (D1, D2) dans une première et une seconde unité d'émetteur-récepteur (TRU1, TRU2) agencées dans des trajets d'émetteur-récepteur parallèles, la génération des données de transmission RF (D1, D2) étant coordonnée conformément à un schéma de transmission MIMO en utilisant une unité de traitement de backhaul commune (7),
fournir des premiers et seconds paquets de données de liaison descendante (P1, P2) contenant les données de transmission RF (D1, D2) à un réseau Ethernet (4) sur les trajets d'émetteur-récepteur parallèles, les premiers paquets de données de liaison descendante (P1) contenant des données de transmission RF (D1) pour effectuer des transmissions RF dans un premier émetteur-récepteur (TRx1) et les seconds paquets de données de liaison descendante (P2) contenant des données de transmission RF (D2) pour effectuer des transmissions RF dans un second émetteur-récepteur (TRx2),
distribuer les premiers et seconds paquets de données (P1, P2) sur le réseau Ethernet (4) à un premier et un second secteur (S1, S2) du réseau de communication sans fil (1), le premier secteur (S1) comprenant le premier émetteur-récepteur (TRx1), le second secteur (S2) comprenant le second émetteur-récepteur (TRx2), les premier et second émetteurs-récepteurs (TRx1, TRx2) étant adaptés pour effectuer des transmissions RF, et
transmettre les données de transmission RF (D1, D2) contenues dans les premiers et seconds paquets de données (P1, P2) en parallèle du premier et du second des émetteurs-récepteurs (TRx1, TRx2) à au moins un terminal (UE1, UE2) en utilisant le schéma de transmission MIMO.

2. Procédé selon la revendication 1, dans lequel les première et seconde unités d'émetteur-récepteur (TRU1, TRU2) sont agencées à des emplacements différents à l'intérieur du réseau de communication (1).

3. Procédé selon la revendication 2, dans lequel les première et seconde unités d'émetteur-récepteur (TRU1, TRU2) sont agencées dans des stations de base différentes (2a, 2b).

4. Procédé selon la revendication 1, dans lequel les premier et second secteurs (S1, S2) du système de communication sans fil (1) sont attribués à des LAN Virtuels différents du réseau Ethernet (4).

5. Procédé selon la revendication 1, comprenant en outre les étapes suivantes :
agréger des paquets de données contenant des données de transmission RF (U1) reçues dans le premier émetteur-récepteur (TRx1) pour former un premier flux de liaison montante (Σ(1)) de paquets de données, et agréger des paquets de données contenant des données de transmission RF (U2) reçues dans le second émetteur-récepteur (TRx2) pour former un second flux de liaison montante (Σ(2)) de paquets de données.

6. Procédé selon la revendication 1, dans lequel les émetteurs-récepteurs (TRx1, TRx2) du système de communication sans fil (1) sont agencés dans un bâtiment.

7. Réseau de communication (1), comprenant :
une première et une seconde unité d'émetteur-récepteur (TRU1, TRU2) pour générer des données de transmission RF (D1, D2),
une unité de traitement de backhaul commune (7) adaptée pour coordonner la génération des données de transmission RF (D1, D2) dans les unités d'émetteur-récepteur (TRU1, TRU2) conformément à un schéma de transmission MIMO, les première et seconde unités d'émetteur-récepteur (TRU1, TRU2) étant agencées dans des trajets d'émetteur-récepteur parallèles,
une première unité de fourniture de paquet de données (5a) dans le premier trajet d'émetteur-récepteur pour fournir des premiers paquets de données de liaison descendante (P1) contenant des données de transmission RF (D1) pour effectuer des transmissions RF dans un premier émetteur-récepteur (TRx1),
une seconde unité de fourniture de paquet de données (5b) dans le second trajet d'émetteur-récepteur pour fournir des seconds paquets de données de liaison descendante (P2) contenant des données de transmission RF (D2) pour effectuer des transmissions RF dans un second émetteur-récepteur (TRx2),
un réseau Ethernet (4), pour distribuer les premiers et seconds paquets de données (P1, P2) à un premier et un second secteur (S1, S2), le premier secteur (S1) comprenant le premier émetteur-récepteur (TRx1), le second secteur (S2) comprenant le second émetteur-récepteur (TRx2), les premier et second émetteurs-récepteurs (TRx1, TRx2) étant adaptés pour effectuer des transmissions RF,
le réseau de communication (1) étant adapté pour la transmission parallèle des données de liaison descendante RF (D1, D2) comprises dans les premiers et seconds paquets de données (P1, P2) du premier et du second des émetteurs-récepteurs (TRX1, TRx2) à au moins un terminal (UE1, UE2) en utilisant le schéma de transmission MIMO.

8. Réseau de communication selon la revendication 7, dans lequel les première et seconde unités d'émetteur-récepteur (TRU1, TRU2) sont agencées dans une première et une seconde station de base (2a, 2b).

9. Réseau de communication selon la revendication 7, dans lequel le réseau Ethernet (4) comprend au moins une unité d'agrégation (6a, 6b), en particulier un commutateur Ethernet Gigabit, qui est adapté pour agréger des paquets de données contenant des données de transmission RF (U1 ; U2) reçues dans le premier émetteur-récepteur (TRx1) pour former un premier flux de liaison montante (Σ(1)) de paquets de données, et pour agréger des paquets de données contenant des données de transmission RF (U1 ; U2) reçues dans le second émetteur-récepteur (TRx2) pour former un second flux de liaison montante (Σ(2)) de paquets de données.
